(19) Europäisches Patentamt
European Patent Office
Office européen des brevets

(11) Publication number: **0 589 643 A1**

# (12) EUROPEAN PATENT APPLICATION

(21) Application number: **93307385.0**

(51) Int. Cl.$^5$: **H04N 5/232**

(22) Date of filing: **17.09.93**

(30) Priority: **19.09.92 KR 9217124**

(43) Date of publication of application:
**30.03.94 Bulletin 94/13**

(84) Designated Contracting States:
**DE FR GB IT NL**

(71) Applicant: **SAMSUNG ELECTRONICS CO., LTD.**
**416 Maetan-3 Dong, Paldal-ku**
**Suwon-city, Kyungki-do 441-373 (KR)**

(72) Inventor: **Paik, Joon-Ki**
**7-605, Jamwonhansin Apt., 19-6**
**Jamwon-dong, Seocho-gun, Seoul (KR)**
Inventor: **Park, Yong-Chul**
**306-205, Jinjoo Apt., Gajwa 2-dong**
**Seo-gu, Incheon (KR)**
Inventor: **Park, Sung-Wook**
**114, hanseo Apt., 407, Gansuk 1-dong**
**Namdong-gu, Incheon (KR)**
Inventor: **Kim, Dong-Wook**
**201-3, Dongkyo-dong**
**Mapo-gu, Seoul (KR)**

(74) Representative: **Stanley, David William et al**
**APPLEYARD LEES 15 Clare Road**
**Halifax West Yorkshire HX1 2HY (GB)**

## (54) Digital image stabilization using binary edge data.

(57) A digital image processing method comprises the steps of detecting an edge (10) and transforming multiple bit digital image data into binary edge data, matching an edge pattern (20) and generating correlational values of the binary edge data and local motion vector candidates, generating a local motion vector (30) to produce corresponding motion vectors using the maximum correlation value from one or more corresponding motion-extraction-area pairs, generating a field motion vector (40) to generate accumulated motion vectors by averaging weighted values of the local motion vectors, generating an accumulated motion vector (50) by using a sequential accumulation of the weighted values of the present and previous field motion vectors, generating a field memory read address (60) using the accumulated motion vector, and digitally zooming (80) an image to eliminate abnormal boundaries. Accordingly, hardware configuration can be simplified to reduce cost and image stability can be enhanced.

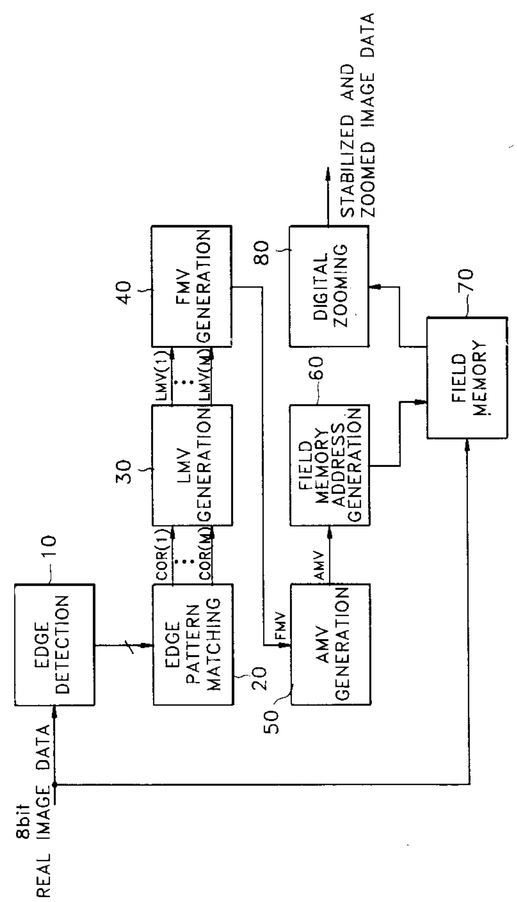


FIG. 1

EP 0 589 643 A1

The present invention relates to digital image processing systems, and more particularly to digital image stabilization (DIS) systems.

In many image processing systems, one of the most important requirements is the stable display of dynamic images. Various image stabilization systems have been proposed and developed for different uses. A conventional image stabilization method and system will be explained below.

An electronic image stabilization method for a target tracking system in a guided missile is disclosed in U.S. Patent No. 4,637,571 patented to Holder et al., and comprises the steps of sensing vibrations in a missile body, providing angular velocity signals in response to the vibrations, and coupling the angular velocity signals to vertical and horizontal deflection coils of a camera in opposition to the undesirable vibrations so as to output a stable image to a missile target tracker.

A disclosure entitled "VHS Camcorder with Electronic Image Stabilizer" by Oshima et al. (IEEE Trans., Consumer Electronics, Vol.35, No.4, pp.749-758, November 1989) describes an electronic image stabilizer for a video camera in which a gyro sensor is used for sensing the angular velocity of undesirable camera motion, and the perceived image vibration is compensated by rotating a lens unit in opposition to the angular velocity vibration.

The above two systems are similar in the sense that they detect angular velocity by the use of gyro sensors, while they differ from each other in terms of compensating the angular velocity. These methods have one disadvantage in that they are mechanical in nature (i.e. they use gyros) and motion compensation is accomplished via the control of a deflection coil or a compass mechanism. That is, mechanical apparatuses consequently result in a bulky, expensive system.

Also, a disclosure entitled "Electronic Image Stabilizer for Video Camera Use" by Kinugasa et al. (IEEE Trans., Consumer Electronics, Vol.36, No.3, pp. 520-525, August 1990) describes another image stabilizer, which is realized by scanning image selection and motion vector detection. Scanning area selection is done by appropriately changing the read-out position of an image sensor, and motion vectors are extracted by using reduced one-dimensional horizontal and vertical edge data.

Still another disclosure, entitled "Automatic Image Stabilizing System by Full-digital Signal Processing" by Uomori et al. (IEEE Trans, Consumer Electronics, Vol.36, No.3, pp. 510-519, August 1990), describes a digital image stabilizer for a video camera. Here, a motion estimation portion uses a band extract representative point (BERP) method, and a motion vector detection portion comprises a vector computing circuit, a motion vector integrating circuit using an image stabilization feature, a mean value decision circuit, and a coring circuit.

In contrast with the first two, these two systems are electronically realized without incorporating a mechanical apparatus, but the motion vector estimation method of Kinugasa has difficulty in accurately estimating the amount and direction of undesirable fluctuations and, more specifically, the accuracy of the motion vector estimation decreases as the fluctuation frequency increases. Furthermore, when the Uomori system is compared with any of the above methods, several advantages emerge: 1) the BERP method can increase the accuracy of the estimated motion vector by increasing the number of representative points, 2) the computation method in the motion vector detector has a numerical basis capable of performing an accurate motion vector determination, and 3) it can be realized in a fully digital system. However, this system requires at least one external microcomputer, a field memory either externally or internally, and a number of the representative point memories.

Preferred embodiments of the present invention aim to provide a digital image stabilization method capable of providing a uniformly stabilized image within a constant motion frequency band under the assumption that the motion does not exceed a predetermined range.

Another aim is to provide a digital image stabilization method capable of producing a stabilized image even with existence of irregular conditions such as noise, moving objects, intentional panning, etc.

A further aim is to provide a digital image stabilizer system to simplify hardware.

According to one aspect of the present invention, there is provided a digital image stabilization method comprising the steps of:

detecting an edge and transforming multiple bit digital image data into binary edge data;

matching an edge pattern and generating correlational values of the binary edge data and local motion vector candidates;

generating local motion vectors using the maximum correlational value from one or more corresponding motion-extraction-area pairs;

generating a field motion vector by averaging weighted values of said local motion vectors;

generating an accumulated motion vector by using a sequential accumulation of the weighted values of the present and previous field motion vectors;

generating a field memory read address using said accumulated motion vector; and

digitally zooming to magnifying the image to eliminate abnormal boundaries.

Preferably, original image data are stored in a field memory which is arranged to be addressed by said field memory read address.

Preferably, said field motion vector is computed using said local motion vectors together with isolativity weights and stability weights.

Preferably, said accumulated motion vector is generated by using a previous weighted accumulated motion vector together with said sequential accumulation of the weighted values of the present and previous field motion vectors.

According to another aspect of the present invention, there is provided a digital image stabilizer system comprising:

edge detecting means for transforming multiple bit digital image data into binary edge image data;

edge pattern matching means for calculating correlational values by counting the number of edges at the same position between corresponding blocks for a reference field and each of a plurality of local motion vector candidates;

local motion vector generation means for generating corresponding local motion vectors using the maximum correlational value from one or more corresponding motion-extraction-area pairs;

field motion vector generation means comprised of a weight generation circuit and sub-circuits for computing weight averaging values of said local motion vectors to generate a field motion vector;

accumulated motion vector generation means for generating an accumulated motion vector by using a weighted sequential accumulation of the present and previous field motion vectors;

field memory read address generation means for calculating a field memory read address using said accumulated motion vector; and

digital zooming means for magnifying an image to eliminate unusual boundaries.

A system as above may further comprise a field memory for storing original image data and arranged to be addressed by said field memory address generation means.

Preferably, said field motion vector generation means is arranged to compute the field motion vector using said local motion vectors together with isolativity weights and stability weights.

Preferably, said accumulated motion vector generation means is arranged to generate said accumulated motion vector by using a previous weighted accumulated motion vector together with said weighted sequential accumulation of the present and previous field motion vectors.

According to a further aspect of the present invention, there is provided a digital image stabilization method or system comprising the steps of, or means for, detecting edges of input image data, generating binary data to represent said edges, detecting and evaluating motion of the image from said binary data, and applying stabilisation to the image in response to the motion detection and evaluation.

A method or system as above may further comprise any one or more of the features disclosed in the accompanying specification, claims, abstract and/or drawings, in any combination.

For a better understanding of the invention, and to show how the same may be carried into effect, reference will now be made, by way of example, to the accompanying diagrammatic drawings, in which:

Figure 1 is a schematic block diagram of one example of a digital image stabilization system of the present invention;

Figures 2A-2C show examples of three image sequences;

Figures 3A-3C show examples of edge images corresponding to original images shown in Figures 2A-2C respectively;

Figure 4 shows an example of correlational values within a given motion extraction area between two images shown in Figures 3A and 3B;

Figure 5A illustrates an example of a method for generating isolation weights; and

Figure 5B illustrates an example of a method for generating stability weights.

The digital image stabilizer system shown in Figure 1 comprises an edge detector 10 for detecting the edge of 8-bit original image data so as to generate binary edge data, an edge pattern matching circuit 20 for providing binary edge data as correlational values to generate local motion vectors, a local motion vector (LMV) generator 30 for receiving the correlation values so as to generate the local motion vectors, a field motion vector (FMV) generator 40 for obtaining an average of adaptive weights of the local motion vectors, an accumulated motion vector (AMV) generator 50 for generating an accumulated motion vector by sequentially accumulating the weights of the field motion vectors, a field memory address generator 60 for generating a field memory address corresponding to the accumulated motion vector, a field memory 70 for generating 8-bit original image data corresponding to the address signals from field memory address generator 60, and a digital zooming circuit 80 for interpolating data from field memory 70 so as to generate stabilized and magnified image data.

An example of operation of the above-described system will be explained below.

Original image data are stored in edge detection means 10 and external field memory 70. Binary edge

data are output from edge detection means 10 and input to edge pattern matching circuit 20. Edge pattern matching circuit 20 determines M local motion vectors which generate the maximum correlation value for corresponding M motion estimation areas.

Figure 2A shows reference image data of one embodiment, wherein one window data composed of nine pixels each of which is expressed as eight bits in the t-th field has a brightness value of ten, another window data composed of nine pixels each of which is expressed as eight bits has a brightness value of twenty, and the remaining portions have a brightness value of zero.

Figure 2B shows image data which is represented in the (t+1)th field where the reference image data of Figure 2A shift their coordinates by 3 along the X-axis direction and 3 along the Y-axis direction.

Figure 2C shows image data which is represented in the (t+2)th field where the reference image data of Figure 2A shift their coordinates by 5 along the X-axis direction and 3 along the Y-axis direction.

Figures 3A-3C show edge data which are each expressed as one bit after edges of the original image data shown in Figures 2A-2C are detected by edge detection circuit 20.

One set of nine-pixel data and another set of nine-pixel data shown in Figure 2A pass through edge detection circuit 20. Then, peripheral eight-pixel data are judged as an edge so as to be expressed each as "1," and the pixel data which exists in the center of the pixel is not judged as an edge so as to be expressed as "0."

In comparing two edge images as shown in Figures 3A-3C, for example, the motion vector candidates are assumed to be all vectors existing in the area between (-3,-3) and (3,3). Here, the correlational value for the motion vector candidate (-3,-3) is equal to sixteen, since the number of matched edges which are shifted by (-3,-3) is equal to sixteen. For another example, the correlational value for (-2,-3) is equal to eight, and correlational values for the remaining candidate area vectors are computed in a similar way.

Figure 4 shows the magnitude of the correlational value shift of the motion vector candidates for the respective coordinates. Here, the maximum correlation occurs at coordinates (-3,-3).

LMV generator 30 shown in Figure 1 generates M local motion vectors generated by M correlations. That is, the values of LMV(1), LMV(2)..., LMV(M) are produced, in which the value of LMV(1) is (-3,-3).

FMV generator 40 shown in Figure 1 computes the weighted averaging value of local motion vectors LMV(1), LMV(2)..., LMV(M) so as to generate the field motion vector.

The weighted averaging value of the local motion vectors is computed by the following method, assuming that $LMV(i) = (y_i,x_i)$ where i is a natural number from 1 to M, and FMV = (y,x). Here, a motion vector determination algorithm is used for obtaining a desirable field motion vector from M local motion vectors.

Firstly, isolativities $I_x(i)$ and $I_y(i)$ are computed as $I_x(i) = |x_i-m_x|$ and $I_y(i) = |y_i-m_y|$ .

$$m_x = \frac{\sum_{i=1}^{M} x_i}{M}$$

and ...(1)

$$m_y = \frac{\sum_{i=1}^{M} y_i}{M}$$

Then, isolativity weights $a_x(i)$ and $a_y(i)$ are computed.

$$a_x(i) \propto \frac{I}{I_x(i)}$$

and

$$a_y(i) \propto \frac{I}{I_y(i)} \quad (2)$$

Figure 5A shows a typical method for computing isolativity weights.

Secondly, stability weights $s_x(i)$ and $s_y(i)$ are computed thus:

$$s_x(i) \propto \frac{I}{|x_i - x_{old}|}$$

and

$$s_y(i) \propto \frac{1}{|y_i - y_{old}|} \quad (3)$$

where ($x_{old}$,$y_{old}$) is a motion vector computed from the previous data pair of the image.

Figure 5B shows a typical method for computing the stability weights.

Thirdly, the field motion vector is computed using M local motion vectors, isolativity weights, and stability weights.

$$x = \frac{a_x(1)\, s_x(1)\, x_1 + \dots + a_x(M)\, s_x(M)\, x_4}{a_x(1)\, s_x(1) + \dots + a_x(M)\, s_x(M)}$$

and

$$y = \frac{a_y(1)\, s_y(1)\, y_1 + \dots + a_y(M)\, s_y(M)\, y_4}{a_y(1)\, s_y(1) + \dots + a_y(M)\, s_y(M)} \quad (4)$$

The isolativity weights reduce as the isolativity increases, and become zero when the isolativity is larger than a predetermined value. On the other hand, the greater the difference between the corresponding local motion vector and the field motion vector of the previous field, the greater the reduction in the stability weights becomes. Meanwhile, the stability weight value does not become zero so as not to completely lose the motion vector component. For example, if we have four LMV values, such as LMV(1)=(-3,-3), LMV(2)=(-3,-3), LMV(3)=(4,2) and LMV(4)=(-3,-3), the averaging value of the four is (-1.25,-1.75) according to Equation (1). The four isolativity weights in the x direction then become 0.25, 0.25, 0.0, and 0.25 according to Equation (2) and Figure 5A. Similarly, the four isolativity weights in the y direction become 0.5, 0.5, 0.0, and 0.5. If the prior motion vector is (-2,-2), the stability weights in the x and y directions become 1.0, 1.0, 0.125 & 1.0 and 1.0, 1.0, 0.125 & 1.0, respectively, according to Equation (3). Consequently, FMV generator 40 generates a field motion vector, such as (-3,-3), which is not to be affected by a specific local motion vector LMV(3)=(4,2).

AMV generator 50 shown in Figure 1 accumulates a field motion vector for sequentially generating the following accumulated motion vector.

The AMV computation procedure is given by

$$AMV(t) = kAMV(t-1) + \alpha FMV(t-1) + (1-\alpha)FMV(t) \quad (5)$$

where t represents a time (or field) index, the constant k ($0<k<1$) is used for realizing smooth panning, and $\alpha$ ($0<\alpha<1$) for filtering out the unexpected noise effect on the accumulated motion vector. When a practical motion deviates from a predetermined LMV range and the computed AMV deviates from the predetermined range, the accumulated motion vector is limited by the predetermined constant. Then, the accumulated motion vector is reduced to the k value.

Field memory address generator 60 of Figure 1 generates a starting address for reading data from field memory 70 using the accumulated motion vector. A digital zooming circuit 80 interpolates the input image data to produce the stabilized and magnified image data.

Accordingly, the above-described digital image stabilization method and system have three main advantages: firstly, as an electronic system which does not require a mechanical system, an embodiment of a miniaturized system is possible; secondly, the configuration of the system is simplified by not separately using an additional microcomputer or a general-use/exclusive-use digital signal processor; and thirdly, the image stability of the digital image stabilizer system and method is higher than that of conventional digital image stability systems.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A digital image stabilization method comprising the steps of:
   detecting an edge and transforming multiple bit digital image data into binary edge data;
   matching an edge pattern and generating correlational values of the binary edge data and local motion vector candidates;
   generating local motion vectors using the maximum correlational value from one or more corresponding motion-extraction-area pairs;
   generating a field motion vector by averaging weighted values of said local motion vectors;
   generating an accumulated motion vector by using a sequential accumulation of the weighted values of the present and previous field motion vectors;
   generating a field memory read address using said accumulated motion vector; and
   digitally zooming to magnifying the image to eliminate abnormal boundaries.

2. A method according to claim 1, wherein original image data are stored in a field memory which is arranged to be addressed by said field memory read address.

3. A method according to claim 1 or 2, wherein said field motion vector is computed using said local motion vectors together with isolativity weights and stability weights.

4. A method according to claim 1, 2 or 3, wherein said accumulated motion vector is generated by using a previous weighted accumulated motion vector together with said sequential accumulation of the weighted values of the present and previous field motion vectors.

5. A digital image stabilizer system comprising:
   edge detecting means (10) for transforming multiple bit digital image data into binary edge image data;
   edge pattern matching means (20) for calculating correlational values by counting the number of edges at the same position between corresponding blocks for a reference field and each of a plurality of local motion vector candidates;
   local motion vector generation means (30) for generating corresponding local motion vectors using the maximum correlational value from one or more corresponding motion-extraction-area pairs;
   field motion vector generation means (40) comprised of a weight generation circuit and sub-circuits for computing weight averaging values of said local motion vectors to generate a field motion vector;
   accumulated motion vector generation means (50) for generating an accumulated motion vector by using a weighted sequential accumulation of the present and previous field motion vectors;
   field memory read address generation means (60) for calculating a field memory read address using said accumulated motion vector; and
   digital zooming means (80) for magnifying an image to eliminate unusual boundaries.

6. A system according to claim 5, further comprising a field memory (70) for storing original image data and arranged to be addressed by said field memory address generation means (60).

7. A system according to claim 5 or 6, wherein said field motion vector generation means (40) is arranged to compute the field motion vector using said local motion vectors together with isolativity weights and stability weights.

8. A system according to claim 5, 6 or 7, wherein said accumulated motion vector generation means (50) is arranged to generate said accumulated motion vector by using a previous weighted accumulated motion vector together with said weighted sequential accumulation of the present and previous field motion vectors.

9. A digital image stabilization method or system comprising the steps of, or means for, detecting edges of input image data, generating binary data to represent said edges, detecting and evaluating motion of the image from said binary data, and applying stabilisation to the image in response to the motion detection and evaluation.

10. A method or system according to claim 9, further comprising any one or more of the features disclosed in the accompanying specification, claims, abstract and/or drawings, in any combination.

FIG. 1

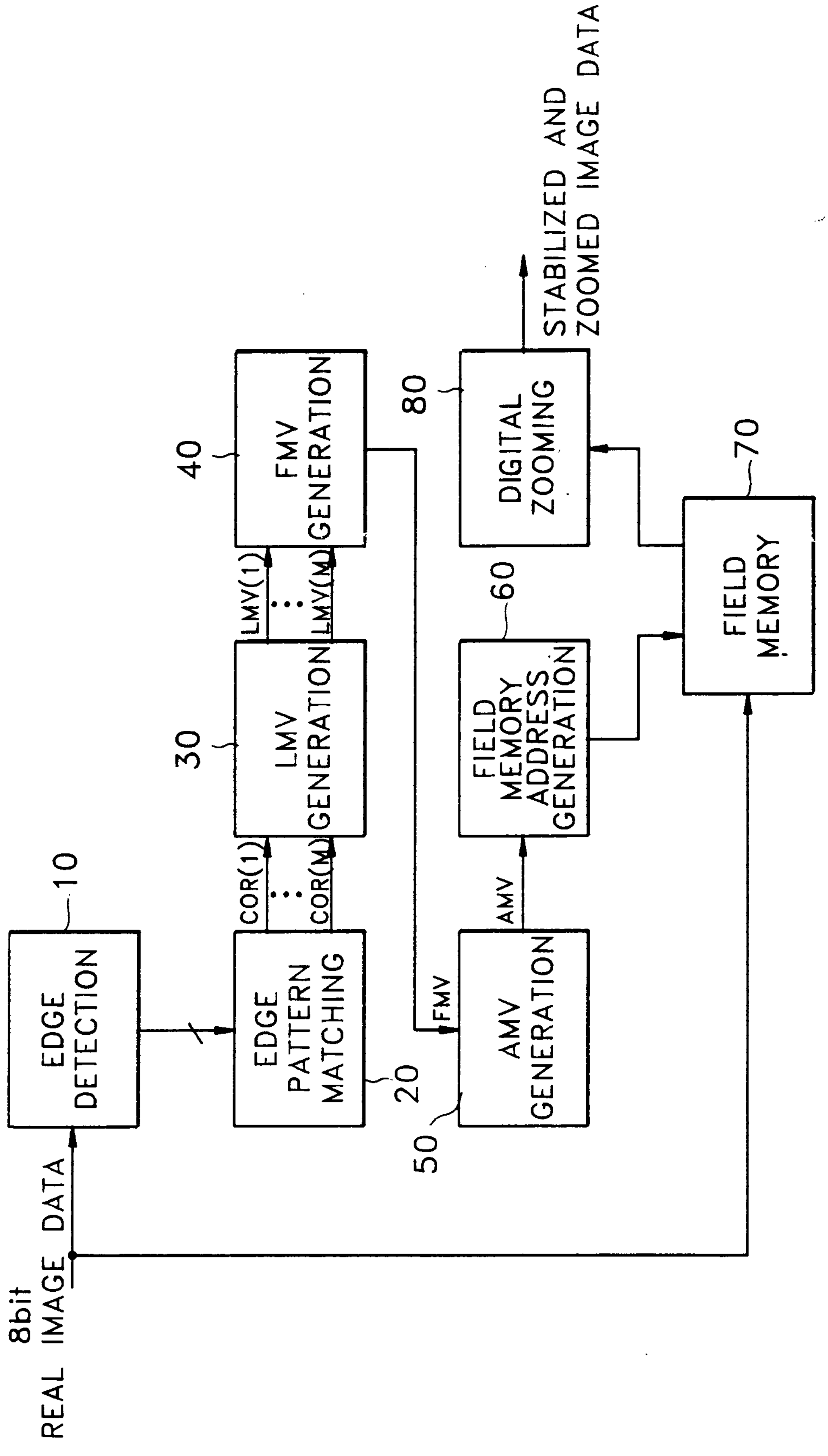
8bit
REAL IMAGE DATA
EDGE DETECTION
10
EDGE PATTERN MATCHING
20
COR(1)
COR(M)
LMV GENERATION
30
LMV(1)
LMV(M)
FMV GENERATION
40
FMV
AMV GENERATION
50
AMV
FIELD MEMORY ADDRESS GENERATION
60
FIELD MEMORY
70
DIGITAL ZOOMING
80
STABILIZED AND ZOOMED IMAGE DATA

FIG. 2A

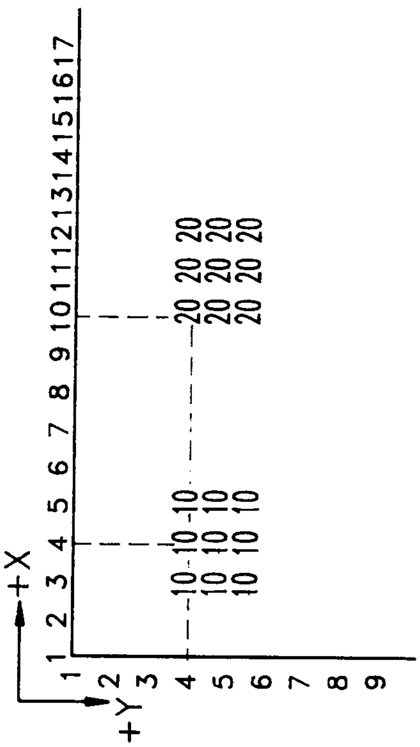


IMAGE AT t-TH FIELD

FIG. 2B

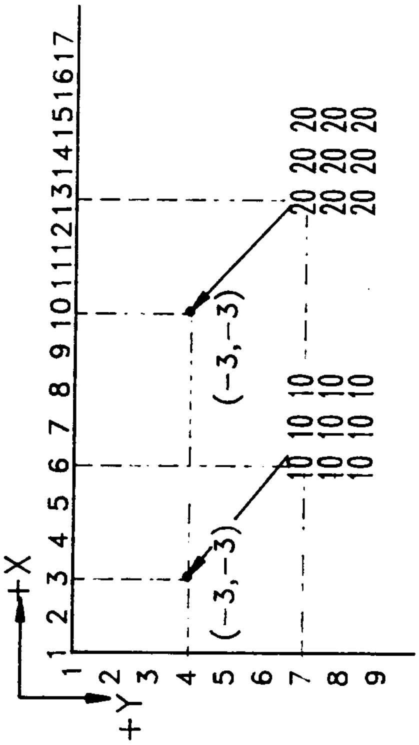


IMAGE AT (t+1)TH FIELD

FIG. 2C

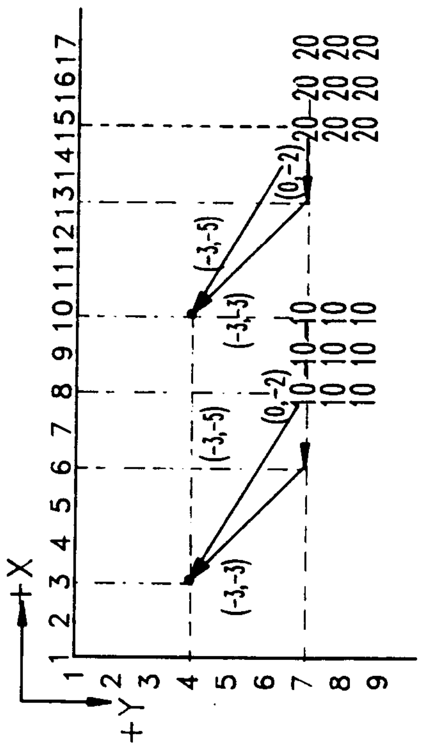


IMAGE AT (t+2)TH FIELD

FIG. 3B

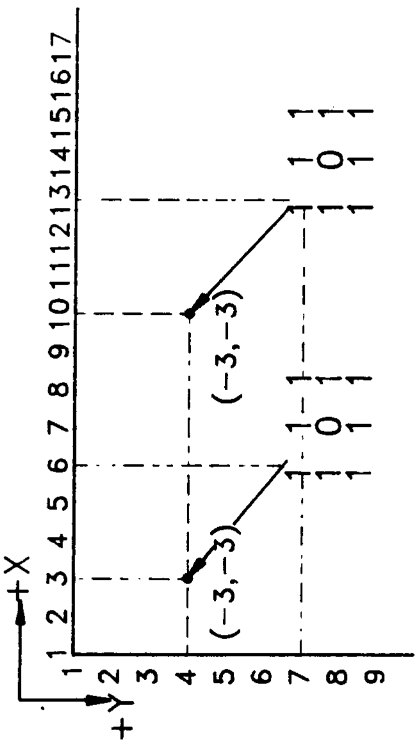


IMAGE AT (t-1)TH FIELD

FIG. 3A

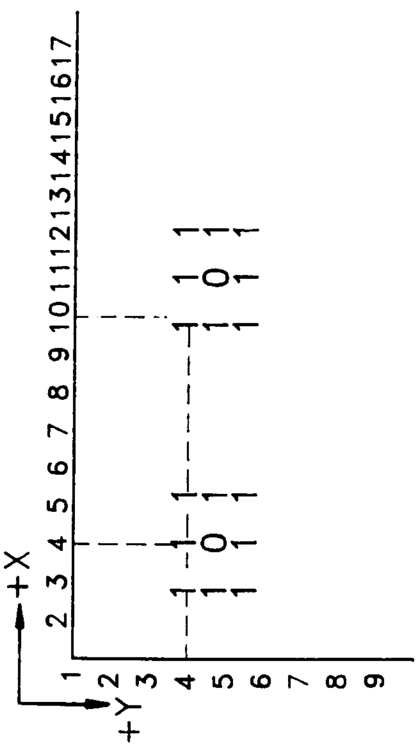


EDGE IMAGE AT t-TH FIELD EDGE

FIG. 3C

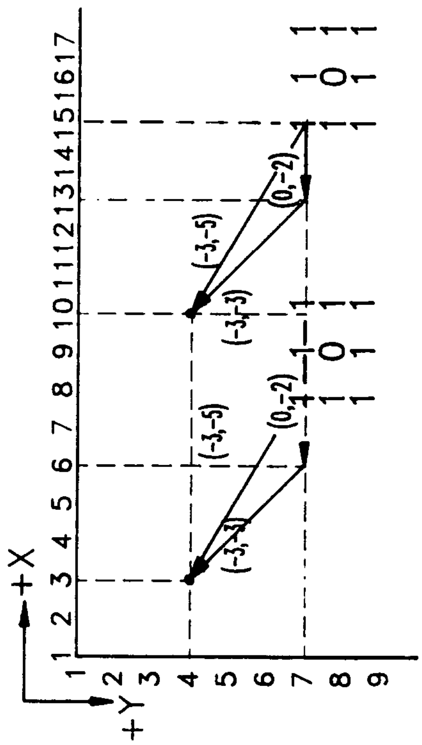


EDGE IMAGE AT (t+2)TH FIELD

FIG. 4

| | −3 | −2 | −1 | ··· | +3 |
|---|---|---|---|---|---|
| −3 | 16 | 8 | 6 | ··· | 8 |
| −2 | 8 | 4 | 4 | ··· | 4 |
| −1 | 6 | 4 | 2 | ··· | 3 |
| ⋮ | ⋮ | ⋮ | ⋮ | | ⋮ |
| +3 | 0 | 0 | 0 | ··· | 0 |

FIG. 5A

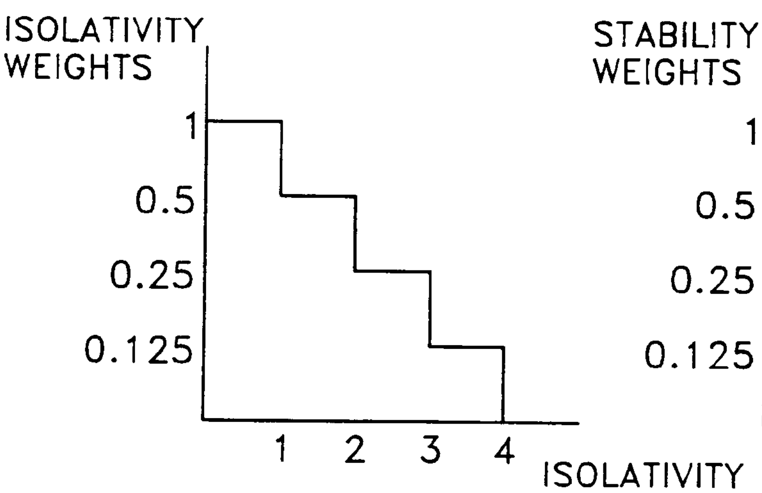


FIG. 5B

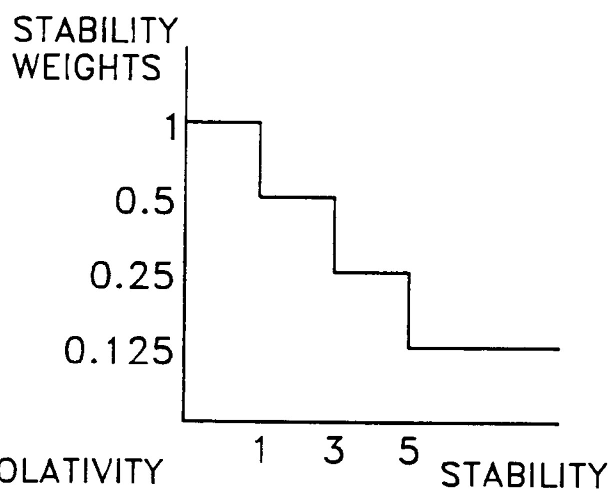

European Patent Office

# EUROPEAN SEARCH REPORT

Application Number
EP 93 30 7385

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int.Cl.5) |
| X | IEEE TRANSACTION ON CONSUMER ELECTRONICS vol. 38, no. 3 , August 1992 , NEW YORK, USA pages 607 - 613 JOON KI PAIK, YONG CHUL PARK , DONG WOOK KIM 'An adaptive motion decision system for digital image stabilizer based on edge pattern matching' * page 608, left column, line 8 - page 615, left column, line 26 * --- | 1-10 | H04N5/232 |
| A | IEEE TRANSACTION ON CONSUMER ELECTRONICS vol. 37, no. 3 , August 1991 , NEW YORK, USA pages 521 - 530 JOON KI PARK, YONG CHUL PARK, SUNG WOOK PARK 'An edge detection approach to digital image stabilization based on tri - state adaptive linear neurons' * page 522, left column, line 30 - page 523, left column, line 40 * * figures 2,6,7,8 * --- | 1-10 | TECHNICAL FIELDS SEARCHED (Int.Cl.5) |
| A | SMPTE JOURNAL vol. 101, no. 2 , February 1992 , WHITE PLAINS NY, USA pages 66 - 75 XP000252752 KENYA UOMORI, ATUSHI MORIMURA, HIROFUMI ISHII 'Electronic image stabilization system for video cameras and vcrs' * page 66, right column, line 23 - page 70, left column, line 20 * * page 71, left column, line 31 - right column, line 15 * --- -/-- | 1,2,4-6, 8,9 | H04N G06F |

The present search report has been drawn up for all claims

| Place of search | Date of completion of the search | Examiner |
|---|---|---|
| THE HAGUE | 17 December 1993 | Wentzel, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 93 30 7385

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | EP-A-0 448 411 (VICTOR COMPANY OF JAPAN)<br>* page 3, line 23 - line 32 *<br>* page 4, line 5 - page 6, line 41 *<br>* page 9, line 2 - page 10, line 9 *<br>--- | 1,5,9 | |
| A | EP-A-0 449 283 (SANYO ELECTRIC CO., LTD.)<br>* column 2, line 21 - line 45 *<br>* column 3, line 13 - line 32 *<br>* column 4, line 41 - column 5, line 41 *<br>* column 6, line 40 - column 10, line 18 *<br>----- | 1,5,9 | |
| | | | TECHNICAL FIELDS SEARCHED (Int.Cl.5) |

The present search report has been drawn up for all claims

| Place of search | Date of completion of the search | Examiner |
|---|---|---|
| THE HAGUE | 17 December 1993 | Wentzel, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)